# EUROPEAN PATENT SPECIFICATION

(11) **EP 1 627 566 B1**
(45) Date of publication and mention of the grant of the patent: **10.09.2008**
(21) Application number: 05106349.3
(22) Date of filing: 12.07.2005
(51) Int. Cl.: A01N 1/02, A61J 1/00, A61J 1/05, A61J 1/10, A61J 1/12, A61J 1/20, A61M 1/02

(54) **Safety pouch for cryo-preservation of staminal cells or similar blood components**
Sicherheitsbeutel für die Kryokonservierung von Stammzellen und ähnlichen Blutkomponenten
Poche de sécurité pour cryoconservation des cellules souches et des composants sanguins similaires

(30) Priority: 27.07.2004 IT MI20041517
(43) Date of publication of application: 22.02.2006
(73) Proprietor: HAEMOPHARM INDUSTRY AG, 9490 Vaduz (LI); SIAD Healthcare S.p.A., 20090 Assago MI (IT)
(72) Inventor: Conconi, Mario, 20090 Monza (MI) (IT)
(74) Representative: Mittler, Enrico

(56) References cited:
- EP-A- 0 253 651
- WO-A-01/08630
- WO-A-96/17577

## Description

The present invention concerns a safety pouch for cryo-preservation of staminal cells or similar blood components.

Current pouches for staminal cells, made of suitable plastic material (as for instance Ethyl Vinyl Acetate/E.V.A.) and opportunely sealed, are usually preserved at very low temperature (minimum reachable -196°C, usually -130°C or -150°C) in cryo-biological containers working with liquid nitrogen.

It can occur that the pouch is not perfectly watertight and therefore its content can get contaminated by the external atmosphere or can in turn contaminate the same, therefore with the risk of contaminating one of the other several pouches contained in the cryo-biological container.

EP 0 253 651 A2 and WO 96/17577 A1 disclose apparatus and methods for storing and processing blood. Blood is contained in a main pouch which is then put into a sealable secondary pouch for storage. Both documents also disclose the presence of a housing for at least one test tube arranged outside the secondary pouch.

WO 01/08630 A2 discloses a storage package for live materials, including cells and blood, comprising an inner container within an outer container, both of which may be made of flexible materials.

Object of the present invention is to provide a device that is capable to perfectly isolate the pouch containing the staminal cells or other similar blood components, thus guaranteeing its perfect cryo-preservation.

According to the invention such object is attained with a pouch for cryo-preservation of staminal cells or similar blood components as recited in claim 1..

The presence of the external pouch allows to handle the main pouch in conditions of absolute tranquillity and safety, the substance contained therein being not contaminable and therefore ready to be administered to the patient.

These and other characteristics of the present invention will become evident from the following detailed description of an embodiment thereof that is illustrated as a non-limiting example in the enclosed drawings, in which:
Figure 1 shows a front view of a safety pouch according to the present invention;

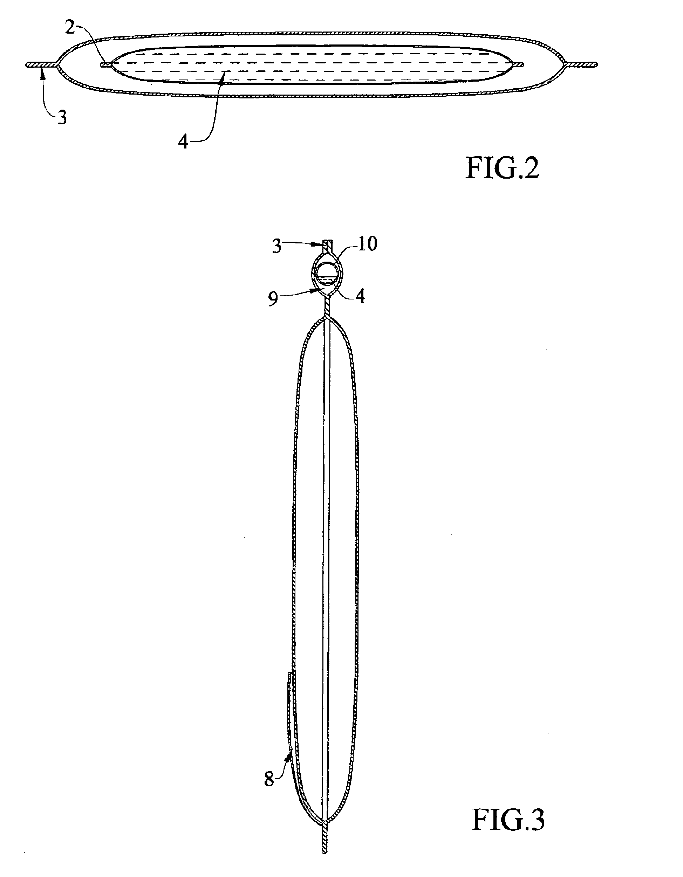

Figure 2 shows a section view according to line II-II in Figure 1;
Figure 3 shows a section view according to line III-III in Figure 1.

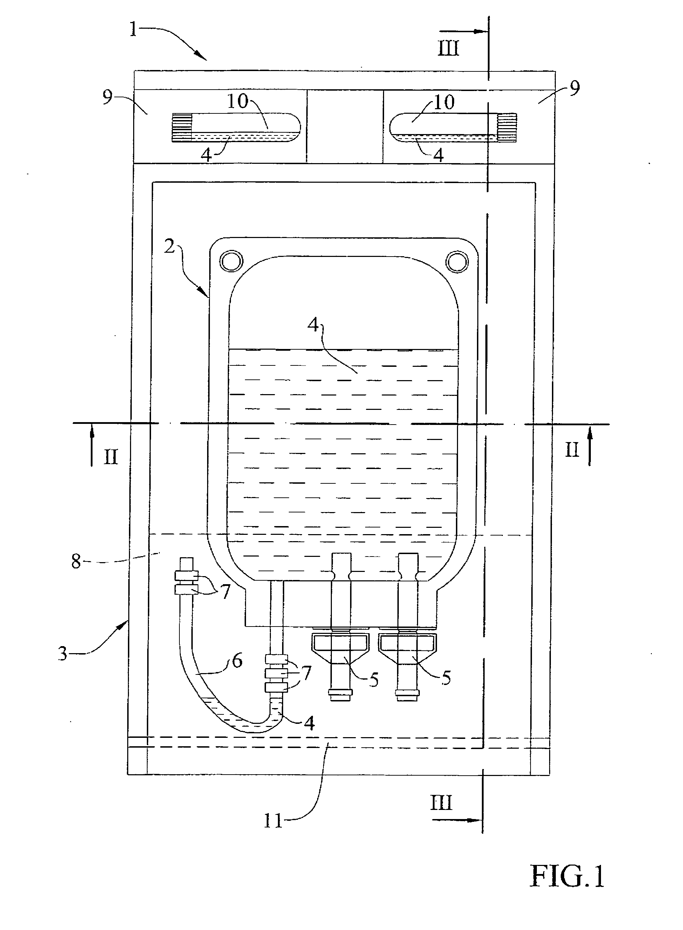

Figure 1 shows a safety pouch 1 comprising an internal main pouch 2 and an external secondary pouch 3 containing said internal main pouch 2.

The internal main pouch 2 contains a substance 4 to be preserved that can be introduced or extracted by means of a pair of frangible connectors 5 and a loading tube 6, both completely contained in the external secondary pouch 3.

Pinchings 7 guarantee the watertightness of the loading tube 6 once the internal main pouch 2 has been filled.

The external secondary pouch 3 comprises an external pocket 8 suitable to house tags with information for the identification of the substance 4, and a pair of housings 9 suitable to accommodate test-tubes 10 containing the same substance 4.

A seal 11 guarantees the perfect watertightness of the external secondary pouch 3.

The pouch 1 can be handled in total safety by the user. If there is the need to analyse the substance one can use the test-tubes 10 without having to open the external pouch 3.

Since the aforesaid analysis could not give absolute guarantee, because for a human error the test-tubes could be not representative of the substance 4, for greater safety before the introduction of the substance into the patient it is possible to use the substance contained in the loading tube 6, which can be extracted from the external pouch 3 by forcing the seal 11.

At the end of the loading of the internal main pouch 2 one proceeds in fact to the sealing of the loading tube 6 by means of the pinchings 7 which isolate a length of the tube 6 where a small amount of the substance remains which represents with absolute certainty the substance 4 contained in the internal main pouch 2, since it is a portion of the same.

Once the integrity of the substance 4 contained in the loading tube 6 has been verified one can proceed with the use of the same by breaking the frangible connectors 5 and by connecting them through appropriate infusion sets (not shown) with the patient.

## Claims

1. Safety pouch for cryo-preservation of staminal cells or blood similar components, comprising a main pouch (2) for containing staminal cells or blood similar components (4), at least one frangible connector (5) for connection of said main pouch (2), at least one loading tube (6) for loading said main pouch (2) with staminal cells or blood similar components (4), said loading tube having a free end provided with an openable closing pinching (7), and an external perfectly sealable secondary pouch (3) for containing said main pouch (2), said at least one frangible connector (5) and said at least one loading tube (6), **characterised in that** said loading tube (6) is provided with an additional openable closing pinching (7) near its connection with said main pouch (2) so that a test portion of said staminal cells or blood similar components (4) loaded in said main pouch (2) can be stored in said loading tube (6) between said pinchings (7).

2. Pouch according to claim 1, **characterised in that** said external secondary pouch (3) comprises at least one first external pocket (8) suitable to accommodate tags with information for the identification of the substance (4).

3. Pouch according to claim 1, **characterised in that** it includes at least one housing (9) for a testtube (10) containing the same substance (4) found in the main pouch (2).

## Patentansprüche

1. Sicherheitsbeutel für die Kryokonservierung von Stammzellen oder blutähnlichen Komponenten, aufweisend einen Hauptbeutel (2) zum Enthalten von Stammzellen oder blutähnlichen Komponenten (4), mindestens einen zerbrechlichen Verbinder (5) zum Verbinden des Hauptbeutels (2), mindestens ein Beladerohr (6) zum Beladen des Hauptbeutels (2) mit Stammzellen oder blutähnlichen Komponenten (4), wobei das Beladerohr ein freies Ende aufweist, das mit einer öffenbaren Schließklemme (7) und einem nach außen perfekt abdichtbaren zweiten Beutel (3) zum Enthalten des Hauptbeutels (2), des mindestens einen zerbrechlichen Verbinders (5) und des mindestens einen Beladerohrs (6), vorgesehen ist, **dadurch gekennzeichnet, dass** das Beladerohr (6) in der Nähe seiner Verbindung mit dem Hauptbeutel (2) mit einer zusätzlichen öffenbaren Schließklemme (7) versehen ist, so dass ein Testanteil der im Hauptbeutel (2) eingeladenen Stammzellen oder blutähnlichen Komponenten (4) im Beladerohr (6) zwischen den Klemmen (7) gelagert werden kann.

2. Beutel nach Anspruch 1, **dadurch gekennzeichnet, dass** der äußere zweite Beutel (3) mindestens eine erste äußere Tasche (8) aufweist, die zum Unterbringen von Schildern mit Informationen für die Identifizierung der Substanz (4) geeignet ist.

3. Beutel nach Anspruch 1, **dadurch gekennzeichnet, dass** er mindestens ein Gehäuse (9) für ein Testrohr (10) beinhaltet, das die gleiche Substanz (4), die sich in dem Hauptbeutels (2) befindet, enthält.

## Revendications

1. Sachet de sécurité pour la cryoconservation des cellules souches ou des composants sanguins similaires, comprenant un sachet principal (2) pour contenir les cellules souches ou les composants sanguins similaires (4), au moins un connecteur cassable (5) pour le raccordement dudit sachet principal (2), au moins un tube de chargement (6) pour charger ledit sachet principal (2) avec des cellules souches ou des composants sanguins similaires (4), ledit tube de chargement ayant une extrémité libre prévue avec un pincement de fermeture (7) pouvant s'ouvrir, et un sachet secondaire externe pouvant se fermer parfaitement hermétiquement (3) pour contenir ledit sachet principal (2), ledit au moins un connecteur cassable (5) et ledit au moins un tube de chargement (6), **caractérisé en ce que** ledit tube de chargement (6) est doté d'un pincement supplémentaire de fermeture (7) pouvant s'ouvrir à proximité de son raccordement avec ledit sachet principal (2) de sorte qu'une partie d'essai desdites cellules souches ou composants sanguins similaires (4) chargés dans ledit sachet principal (2) peut être stockée dans ledit tube de chargement (6) entre lesdits pincements (7).

2. Sachet selon la revendication 1, **caractérisé en ce que** ledit sachet secondaire externe (3) comprend au moins une première poche externe (8) approprié pour recevoir des étiquettes avec des informations pour l'identification de la substance (4).

3. Sachet selon la revendication 1, **caractérisé en ce qu'**il comprend au moins un boîtier (9) pour un tube d'essai (10) contenant la même substance (4) que celle que l'on trouve dans le sachet principal (2).
